# FASCICULE DE BREVET EUROPEEN

(11) **EP 2 748 457 B1**
(45) Date de publication et mention de la délivrance du brevet: **15.06.2016**
(21) Numéro de dépôt: 12758574.3
(22) Date de dépôt: 22.08.2012
(51) Int. Cl.: F02M 57/06, F23Q 3/00, F02C 7/264, F02C 7/266

(54) **DISPOSITIF D'ALLUMAGE PIEZOELECTRIQUE ET PROCÉDÉ CORRESPENDANT POUR CHAMBRE DE COMBUSTION DE TURBOMACHINE**
PIEZOELEKTRISCHE ZÜNDVORRICHTUNG UND ENTSPRECHENDES VERFAHREN FÜR EINE TURBOMASCHINENBRENNKAMMER
PIEZOELECTRIC IGNITION DEVICE AND CORRESPONDING METHOD FOR A TURBOMACHINE COMBUSTION CHAMBER

(30) Priorité: 26.08.2011 FR 1157564
(43) Date de publication de la demande: 02.07.2014
(73) Titulaire: Snecma, 75015 Paris (FR)
(72) Inventeur: JUCHAULD, Etienne, F-77550 Moissy-Cramayel Cedex (FR); BADINIER, Jean-Pierre, F-77550 Moissy-Cramayel Cedex (FR); ROBERDEAU, Jean-Pierre, F-77550 Moissy-Cramayel Cedex (FR); SERRAU, Marc, F-77550 Moissy-Cramayel Cedex (FR)
(74) Mandataire: Ahner, Philippe
(86) Numéro de dépôt international: PCT/FR2012/051918
(87) Numéro de publication internationale: WO 2013/030493

(56) Documents cités:
- EP-A1- 0 222 173
- WO-A2-01/84061
- GB-A- 1 038 490
- GB-A- 1 591 508

## Description

### DOMAINE TECHNIQUE

La présente invention se rapporte au domaine de l'allumage des chambres de combustion dans les turbomachines, notamment les turbomachines d'aéronefs telles que les turboréacteurs et les turbopropulseurs d'avions.

L'invention concerne en particulier un dispositif d'allumage pour chambre de combustion de turbomachine, comprenant deux électrodes formant une bougie d'allumage, et un module d'alimentation électrique de ces électrodes.

Un tel dispositif, en concordance avec le préambule de la revendication 1, est décrit dans le document GB 1038 490 A.

Elle concerne également une chambre de combustion équipée d'un tel dispositif, une turbomachine comportant une chambre de combustion de ce type, ainsi qu'un procédé d'allumage d'une telle chambre de combustion.

### ÉTAT DE LA TECHNIQUE ANTÉRIEURE

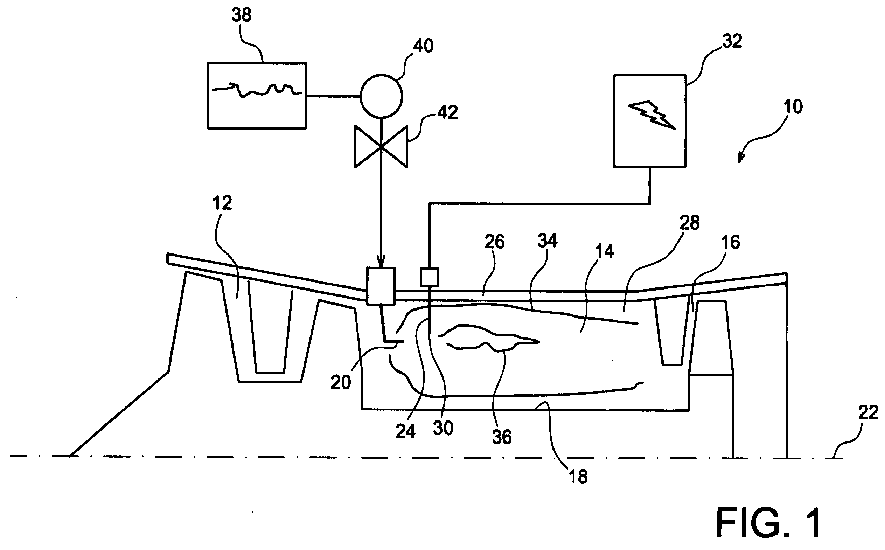

La figure 1 représente un exemple simplifié de turbomachine d'aéronef 10 d'un type connu, comprenant, de l'amont vers l'aval selon la direction générale d'écoulement des gaz, un compresseur 12, une chambre de combustion 14, et une turbine 16 conçue pour entraîner le compresseur 12 par l'intermédiaire d'un arbre commun 18 sous l'effet de la poussée des gaz issus de la chambre de combustion 14, d'une manière bien connue.

La chambre de combustion 14 illustrée sur la figure 1 est du type annulaire, mais la présente invention peut bien entendu être appliquée à d'autres types de chambres de combustion, comme cela apparaîtra plus clairement dans ce qui suit.

Une telle chambre de combustion 14 comporte des injecteurs de carburant 20 répartis circonférentiellement autour de l'axe 22 de la chambre de combustion, et des moyens d'amenée d'air, pour former une nappe d'un mélange gazeux d'air et de carburant au sein de la chambre, ainsi qu'au moins une bougie d'allumage 24 pour provoquer l'inflammation de ce mélange gazeux.

La bougie d'allumage 24 est en général montée sur un carter extérieur 26 délimitant une enceinte 28 dans laquelle est logée la chambre de combustion 14. Plus précisément, la bougie d'allumage 24 présente une extrémité 30 pourvue de deux électrodes destinées à générer un arc électrique sous l'effet d'une tension électrique fournie par un module d'alimentation électrique 32. La bougie 24 passe habituellement au travers d'un orifice ménagé dans une paroi radialement externe 34 de la chambre de combustion de sorte que l'extrémité 30 de la bougie affleure la paroi 34 ou, comme dans l'exemple illustré sur la figure 1, fasse saillie à l'intérieur de la chambre à distance de la paroi 34. il est en général fait en sorte que l'extrémité 30 de la bougie intercepte la nappe d'air et de carburant 36 issue d'un injecteur de carburant 20 particulier, couramment dénommé injecteur de démarrage.

L'injecteur de démarrage 20 précité est habituellement alimenté en carburant sous pression prélevé dans un réservoir de carburant 38 de l'aéronef par un système de régulation comportant au moins une pompe 40 et une vanne commandée 42.

Le module d'alimentation électrique 32 de la bougie d'allumage 24 comporte en général une ou plusieurs batteries ainsi qu'un transformateur de tension pour appliquer une haute tension aux électrodes de la bougie 24.

Un tel module d'alimentation électrique présente toutefois un encombrement important qu'il est souhaitable de réduire, notamment dans le cas de moteurs d'avion de taille relativement réduite, tels que les moteurs destinés à équiper les avions d'affaires.

De plus, les modules d'alimentation électrique contribuent au risque de pannes des bougies d'allumage.

### EXPOSÉ DE L'INVENTION

L'invention a notamment pour but d'apporter une solution simple, économique et efficace à ces problèmes.

Elle propose à cet effet un dispositif d'allumage pour chambre de combustion de turbomachine, comprenant au moins deux électrodes formant une bougie d'allumage, et un module d'alimentation électrique de ces électrodes.

Selon l'invention, le module d'alimentation électrique comporte un élément piézoélectrique relié électriquement aux électrodes précitées, et des moyens d'application par intermittence d'une force sur l'élément piézoélectrique de manière à induire entre ces électrodes une tension électrique suffisante pour provoquer un arc électrique entre ces électrodes, ces moyens comprenant :
- une chambre de circulation de fluide, comportant au moins deux orifices destinés au raccordement de la chambre à un circuit de circulation d'un fluide sous pression et formant respectivement au moins un orifice d'admission et au moins un orifice d'échappement pour ce fluide ;
- une vanne d'obturation de l'orifice d'admission ;
- un piston délimitant la chambre précitée et déplaçable selon deux directions opposées correspondant respectivement à un accroissement et à une réduction du volume de la chambre ;
- des moyens élastiques sollicitant le piston dans ladite direction de réduction du volume de la chambre, et agissant sur l'élément piézoélectrique ; et
- des moyens de commande de la vanne, configurés de manière à :
   - fermer la vanne lorsque le piston atteint une première position prédéterminée en se déplaçant dans ladite direction d'accroissement du volume de la chambre sous la pression d'un fluide admis dans la chambre par l'orifice d'admission, en comprimant ainsi les moyens élastiques de sorte que ces derniers appliquent ladite force sur l'élément piézoélectrique, et à
   - ouvrir la vanne lorsque le piston dépasse une deuxième position prédéterminée en se déplaçant dans ladite direction de réduction du volume de la chambre sous la pression des moyens élastiques, induisant ainsi une éjection de fluide hors de la chambre par l'orifice d'échappement.

Le module d'alimentation électrique du dispositif selon l'invention permet ainsi de fournir de l'énergie électrique aux électrodes formant la bougie d'allumage en utilisant l'effet piézoélectrique pour convertir en énergie électrique de l'énergie mécanique véhiculée par un fluide.

Il est à noter que le fluide et son circuit ne font pas à proprement parler partie du dispositif d'allumage dans la terminologie de la présente invention, mais ils constituent la source d'énergie mécanique à laquelle le dispositif a vocation à être connecté pour son fonctionnement.

Plus précisément, lorsque le module d'alimentation électrique est raccordé à un circuit de circulation d'un fluide sous une pression suffisante, par les orifices d'admission et d'échappement de la chambre de ce module, le piston entame spontanément des oscillations provoquées par une alternance d'ouvertures et de fermetures de la vanne d'obturation de l'orifice d'admission induites par les moyens de commande précités de cette vanne. De telles oscillations conduisent à une alternance de compressions et de détentes des moyens élastiques, qui appliquent ainsi par intermittence une force sur l'élément piézoélectrique.

En effet, l'admission du fluide induit un déplacement du piston tendant à accroître le volume de la chambre et à comprimer les moyens élastiques. Lorsque le piston atteint sa première position prédéterminée, les moyens de commande de la vanne induisent une fermeture de celle-ci. Peu après, la pression du fluide n'étant plus suffisante pour équilibrer la force exercée sur le piston par les moyens élastiques, le piston entame un déplacement dans la direction opposée et réduit alors le volume de la chambre, sous l'effet d'une détente des moyens élastiques. La réduction du volume de la chambre provoque l'éjection, par l'orifice d'échappement de la chambre, d'une partie du fluide contenu dans cette chambre. Lorsque le piston a dépassé la deuxième position précitée, les moyens de commande de la vanne induisent une ouverture de celle-ci. Peu après, la force exercée sur le piston par les moyens élastiques étant devenue suffisamment faible par rapport à la pression d'admission du fluide, le piston repart en sens inverse. Le piston décrit ainsi des mouvements de va-et-vient cycliques.

Le fluide et son circuit influent bien entendu sur le fonctionnement du dispositif d'allumage, en particulier sur la fréquence des oscillations du piston. En effet, cette fréquence d'oscillations dépend notamment de la densité de ce fluide.

La chambre de circulation de fluide peut ne comporter que deux orifices pour le fluide, formant donc un unique orifice d'admission et un unique orifice d'échappement.

En variante, cette chambre de circulation de fluide peut comporter plus de deux orifices, comprenant donc plusieurs orifices d'admission et/ou plusieurs orifices d'échappement.

Il est à noter que les première et deuxième positions prédéterminées du piston sont de préférence confondues.

De cette manière, la fréquence des oscillations du piston peut être relativement élevée, et atteindre par exemple quelques dizaines de Hertz.

Dans ce cas en effet, la vanne est rouverte dès que le piston entame son déplacement dans la direction de réduction du volume de la chambre, de sorte que la durée et la longueur de ce déplacement sont minimales.

En variante, les deux positions prédéterminées du piston peuvent être écartées l'une de l'autre lorsqu'il est souhaitable de réduire la fréquence des oscillations du piston.

Dans ce cas en effet, la vanne est maintenue fermée pendant que le piston parcours la distance séparant ses deux positions prédéterminées.

Par ailleurs, le circuit de circulation de fluide précité peut être un circuit fermé, par exemple un circuit d'huile, mais est de préférence un circuit ouvert, en particulier un circuit de carburant, comme cela apparaîtra plus clairement dans ce qui suit.

De plus, les moyens élastiques comprennent de préférence un ressort de compression.

Un tel ressort présente l'avantage d'être simple à mettre en oeuvre.

En variante, les moyens élastiques peuvent comprendre un volume fermé d'un gaz, également dénommé ressort à gaz.

Des moyens élastiques de ce type présentent l'avantage d'une très faible usure au cours du temps. Bien entendu, le gaz doit être choisi pour avoir une compressibilité suffisante pour permettre des oscillations du piston comme décrit ci-dessus.

En outre, le dispositif d'allumage comprend de préférence un corps de forme allongée destiné à pénétrer au moins partiellement dans une chambre de combustion ou à affleurer une paroi externe de celle-ci, ce corps délimitant un espace dans lequel une électrode intérieure de la bougie s'étend à distance de ce corps, lequel corps forme une électrode extérieure de la bougie.

Avantageusement, une gaine réalisée en un matériau isolant électrique, par exemple du type céramique, est logée dans l'espace précité de manière à isoier mutuellement les deux électrodes de la bougie.

Le dispositif peut comprendre des moyens de montage sur un carter externe de chambre de combustion, ces moyens prenant par exemple la forme d'une platine. Pour rappel, il faut comprendre par carter externe de chambre de combustion un carter délimitant une enceinte dans laquelle la chambre de combustion est logée.

Le dispositif peut ainsi être monté sur un carter externe de chambre de combustion d'une manière semblable à la façon dont sont montées les bougies d'allumage conventionnelles.

Par ailleurs, la vanne d'obturation de l'orifice d'admission précité peut être une vanne à commande électrique, mais est de préférence une vanne à commande mécanique, comme cela apparaîtra plus clairement dans ce qui suit.

Dans un mode de réalisation préféré de l'invention, ladite vanne comporte un élément obturateur qui est relié mécaniquement au piston par les moyens de commande de la vanne, et qui est déplaçable entre une position d'obturation de l'orifice d'admission et une position d'ouverture de cet orifice d'admission, sous l'effet d'un déplacement dudit piston.

La vanne est ainsi une vanne à commande mécanique, de sorte que le module d'alimentation électrique ne nécessite aucun apport extérieur d'énergie électrique pour fonctionner. Ce type de vanne présente en outre l'avantage d'être d'une grande simplicité et d'être particulièrement fiable.

Les moyens de commande de la vanne comprennent de préférence une tige ayant une première extrémité solidaire du piston et une deuxième extrémité opposée portant l'élément obturateur de la vanne.

Cet élément obturateur se déplace ainsi selon la même direction que le piston. La liaison de l'élément obturateur de la vanne au piston par une telle tige présente l'avantage de sa simplicité et de sa fiabilité.

L'élément obturateur de la vanne est par exemple un clapet qui est appliqué sur un siège de la vanne, en position d'obturation de l'orifice d'admission, et qui est écarté du siège précité, en position d'ouverture de l'orifice d'admission. Dans ce cas, l'élément obturateur forme, en position d'obturation de l'orifice d'admission, un élément de retenue en translation du piston.

En variante, l'élément obturateur peut prendre la forme d'un piston d'obturation monté coulissant à étanchéité dans une cheminée débouchant dans la chambre de circulation de fluide et présentant au moins une ouverture latérale débouchant à l'extérieur de ladite chambre et formant ledit orifice d'admission, l'élément obturateur étant, en position d'obturation, disposé en regard de ladite ouverture latérale de manière à obturer cette dernière de manière étanche, et étant, dans sa position d'ouverture, décalé de ladite ouverture latérale selon la direction de coulissement de l'élément obturateur de manière à autoriser une admission de fluide au travers de l'ouverture latérale précitée. Dans ce cas, l'élément obturateur ne retient pas le piston du dispositif lorsque cet élément est dans sa position d'obturation, de sorte que le mouvement de l'ensemble mobile comprenant le piston et l'élément obturateur est entièrement déterminé par les propriétés des moyens élastiques, du fluide, du piston, et de la chambre de circulation de fluide.

D'une manière générale, le module d'alimentation électrique du dispositif comprend avantageusement un boîtier délimitant la chambre de circulation de fluide et dans lequel le piston est monté coulissant.

En particulier, dans le mode de réalisation préféré de l'invention, le module d'alimentation électrique comprend un boîtier qui délimite ladite chambre de circulation de fluide et :
- dans lequel l'élément piézoélectrique est logé,
- dans lequel le piston est monté coulissant, entre ladite chambre qu'il délimite et l'élément piézoélectrique ;
- dans lequel les moyens élastiques sont logés, en étant interposés entre le piston et l'élément piézoélectrique.

Cette configuration présente l'avantage d'une compacité remarquable et d'une simplicité de conception se traduisant également par une bonne fiabilité d'ensemble, notamment du fait que le piston, l'élément piézoélectrique et les moyens élastiques peuvent ainsi être alignés selon la direction de coulissement du piston.

En variante, l'élément piézoélectrique peut ne pas être disposé dans l'alignement du piston selon la direction de coulissement de ce dernier, et être par exemple disposé à l'extérieur de la structure dans laquelle ce piston est monté coulissant.

Dans ce cas, les moyens élastiques ne sont pas interposés directement entre le piston et l'élément piézoélectriques, mais peuvent agir sur ces deux éléments par l'intermédiaire d'un mécanisme plus complexe. Selon la disposition de l'élément piézoélectrique, il peut alors être avantageux que les moyens élastiques appliquent à cet élément piézoélectrique une force de sens opposé à celui de la force appliquée par le piston sur ces moyens élastiques. Dans ce cas, le mécanisme précité comprend par exemple un levier et deux ressorts de compression en appui respectivement sur les deux extrémités du levier, l'un sollicitant le piston, et l'autre agissant sur l'élément piézoélectrique.

En variante encore, l'élément piézoélectrique peut former ledit piston.

Dans ce cas, les moyens élastiques peuvent par exemple être interposés entre l'élément piézoélectrique monté coulissant dans le boîtier précité et un fond de ce boîtier relié électriquement à l'électrode intérieure de la bougie tandis qu'une paroi latérale du boîtier est reliée électriquement à l'électrode extérieure de la bougie et est isolée électriquement du fond précité du boîtier. Dans un tel exemple de réalisation, la liaison électrique entre l'élément piézoélectrique coulissant et l'électrode intérieure de la bougie peut être assurée par les moyens élastiques eux-mêmes, ou par un fil électrique souple.

Dans le mode de réalisation préféré de l'invention, le dispositif comprend en outre au moins un injecteur de carburant raccordé à l'orifice d'échappement de la chambre de circulation de fluide.

Dans ce cas, le dispositif est conçu pour être raccordé à un circuit ouvert de circulation de carburant dont fait partie l'injecteur précité. Plus précisément, il est alors prévu que l'orifice d'admission de la chambre de circulation de fluide du dispositif soit raccordé à des moyens d'amenée de carburant sous pression.

L'injecteur de carburant est de préférence configuré de manière à délivrer une nappe de carburant baignant ies électrodes formant la bougie d'allumage du dispositif.

Selon un exemple démonstratif, le dispositif comporte une chambre de tranquillisation raccordée en entrée à l'orifice d'échappement de la chambre de circulation de fluide et raccordée en sortie à l'injecteur de carburant précité, pour atténuer les saccades de l'écoulement du carburant issu de l'orifice d'échappement du fait des oscillations du piston et permettre ainsi un écoulement de carburant sensiblement stationnaire au sein de l'injecteur.

Dans le mode de réalisation préféré de l'invention, les électrodes, le module d'alimentation électrique et l'injecteur précités sont logés dans un même corps du dispositif.

L'invention permet ainsi de regrouper un injecteur de démarrage et une bougie associée au sein d'une structure commune.

Le dispositif est ainsi d'un encombrement particulièrement réduit, tout en offrant une grande simplicité de montage et de démontage.

Le corps précité comporte de préférence une première partie, de forme allongée, destinée pénétrer au moins partiellement dans la chambre de combustion et à former et loger respectivement les deux électrodes, tel que décrit ci-dessus, ainsi qu'une seconde partie, de forme cylindrique, destinée à demeurer à l'extérieur de la chambre de combustion.

La première partie du corps intègre avantageusement un canal qui débouche au niveau d'une extrémité du corps prévue pour la formation des arcs électriques entre les électrodes précitées, et qui forme ledit injecteur.

Quant à la seconde partie du corps, elle délimite avantageusement un logement pour l'élément piézoélectrique, les moyens élastiques, et le piston du dispositif.

En variante, l'injecteur du dispositif peut être dissocié de la bougie de ce dispositif.

L'injecteur peut par exemple être un injecteur conventionnel destiné à être monté dans un fond de chambre de combustion, à distance d'un corps du dispositif logeant les électrodes formant la bougie ainsi que le module d'alimentation électrique, ce corps étant quant-à lui destiné à être monté sur un carter externe de la chambre de combustion de la manière décrite ci-dessus.

Dans ce cas, le dispositif peut comporter des conduits de mise en communication fluidique de l'injecteur avec la chambre de circulation de fluide du dispositif, et l'injecteur est de préférence disposé de manière à délivrer une nappe de carburant baignant les électrodes formant la bougie du dispositif.

L'invention concerne également une chambre de combustion pour turbomachine, comprenant au moins un dispositif d'allumage du type décrit ci-dessus.

L'invention concerne encore une turbomachine, telle qu'un turboréacteur ou un turbopropulseur d'aéronef, comprenant une chambre de combustion du type décrit ci-dessus ainsi que des moyens commandés d'amenée d'un fluide sous pression qui sont raccordés audit orifice d'admission de la chambre de circulation de fluide du dispositif d'allumage de cette chambre de combustion.

Comme expliqué ci-dessus, le fluide peut être tout type de fluide, notamment de l'huile de lubrification, et de préférence du carburant.

Dans le mode de réalisation préféré de l'invention, ledit fluide est un carburant et le dispositif d'allumage de la chambre de combustion est du type comprenant un injecteur de carburant raccordé audit orifice d'échappement de la chambre de circulation de fluide, comme décrit ci-dessus.

L'invention permet ainsi de mettre à profit la pression du carburant alimentant un injecteur de démarrage pour générer l'énergie électrique nécessaire au fonctionnement de la bougie d'allumage associée à cet injecteur.

L'invention concerne également un procédé d'allumage d'une chambre de combustion dans une turbomachine du type décrit ci-dessus, dans lequel lesdits moyens d'amenée de fluide sont mis en service de manière à provoquer au sein du dispositif d'allumage de la chambre de combustion une alternance entre :
- une phase d'admission dudit fluide dans la chambre de circulation de fluide par chaque orifice d'admission de cette chambre, au cours de iaqueiie ie piston comprime ies moyens élastiques sous la pression du fluide de sorte que ces moyens élastiques appliquent sur l'élément piézoélectrique une force suffisante pour que ce dernier induise entre les électrodes formant la bougie une tension électrique permettant la génération d'un arc électrique, jusqu'à ce que le piston atteigne la première position prédéterminée de sorte que les moyens de commande provoquent une fermeture de la vanne d'obturation dudit orifice d'admission, et
- une phase d'échappement dudit fluide au cours de laquelle les moyens élastiques se détendent et repoussent le piston de manière à induire une éjection de fluide hors de la chambre de circulation de fluide par ledit orifice d'échappement, et de sorte que les moyens de commande provoquent une ouverture de la vanne.

Dans le mode de réalisation préféré de l'invention, la turbomachine étant du type décrit ci-dessus dans lequel ledit fluide est un carburant et dans lequel le dispositif d'allumage de la chambre de combustion est du type comprenant un injecteur de carburant raccordé audit orifice d'échappement de la chambre de circulation de fluide de ce dispositif, ladite phase d'échappement comprend l'alimentation de l'injecteur par le carburant provenant de la chambre de circulation de fluide.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une demi-vue schématique partielle en coupe axiale d'une turbomachine d'aéronef d'un type connu ;
- la figure 2 est une demi-vue schématique partielle en coupe axiale d'une turbomachine d'aéronef comprenant un dispositif d'allumage selon un premier mode de réalisation préféré de l'invention ;
- la figure 2a est une vue à plus grande échelle du détail IIa de la figure 2, illustrant le dispositif d'allumage de la turbomachine ;
- la figure 3 est une vue schématique partielle en coupe axiale d'un dispositif d'allumage selon un deuxième mode de réalisation préféré de l'invention.

Dans l'ensemble de ces figures, des références identiques peuvent désigner des éléments identiques ou analogues.

### EXPOSÉ DÉTAILLÉ DE MODES DE RÉALISATION PREFERES

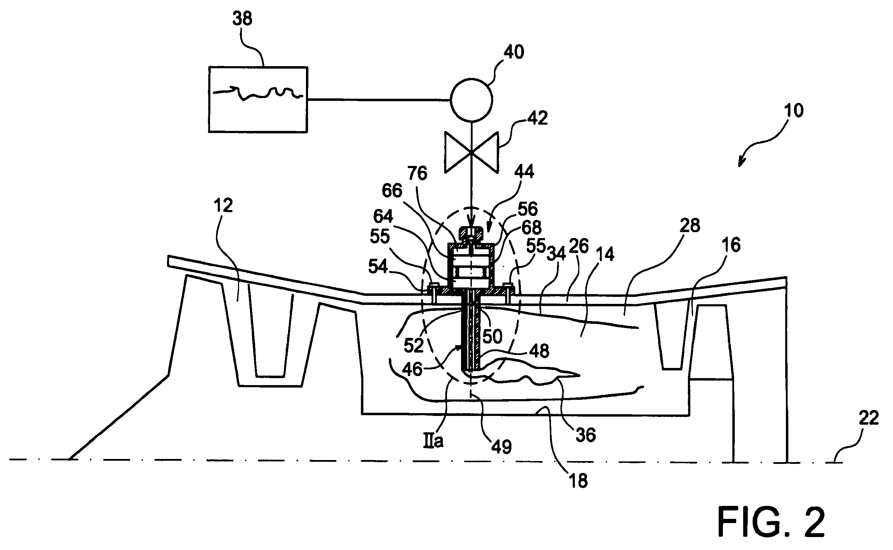

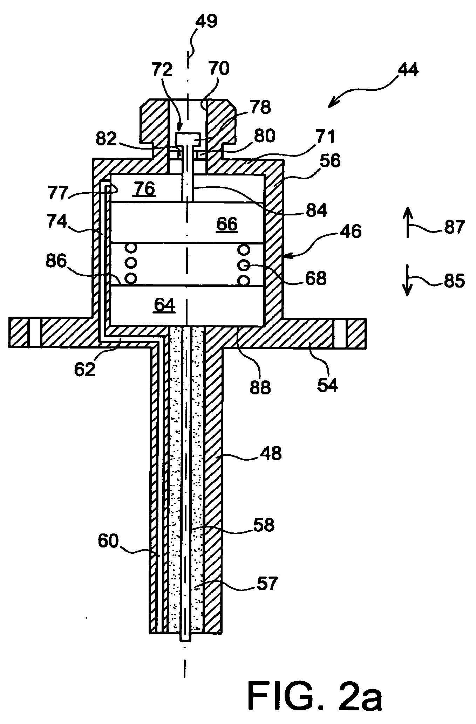

Les figures 2 et 2a illustrent une turbomachine, par exemple un turboréacteur d'avion, comprenant un dispositif d'allumage 44 de sa chambre de combustion annulaire 14 selon un premier mode de réalisation préféré de l'invention.

Dans ce qui suit, les directions axiale et radiale sont définies par rapport à l'axe longitudinal 22 de la turbomachine.

Le dispositif d'allumage 44 comporte un corps 46 intégrant une bougie d'allumage, un module d'alimentation électrique de cette bougie, ainsi qu'un injecteur de démarrage, comme cela apparaîtra plus clairement dans ce qui suit.

Le corps 46 comprend une première partie 48 allongée de forme cylindrique, présentant par exemple la symétrie de révolution autour d'un axe 49, et qui s'étend au travers d'un orifice 50 du carter externe 26 de la chambre de combustion et d'un orifice 52 de la paroi externe 34 de cette chambre de combustion.

Le corps 46 comprend en outre une platine 54 raccordée à une extrémité radialement externe de la première partie 48 précitée et permettant la fixation de ce corps 46 sur une surface extérieure du carter externe 26 de la chambre de combustion, au moyen de vis de fixation 55.

De plus, le corps 46 comporte une seconde partie 56, de forme cylindrique, présentant éventuellement la symétrie de révolution, et s'étendant radialement vers l'extérieur depuis la platine 54.

La première partie 48 du corps 46 est réalisée en un matériau conducteur électrique, et forme une électrode extérieure de la bougie de ce dispositif. Cette première partie 48 du corps 46 entoure une gaine isolante 57 qui est par exemple réalisée en un matériau céramique et au centre de laquelle s'étend une électrode intérieure 58 de la bougie. Cette gaine isolante 57 assure une fonction d'isolation électrique mais aussi de barrière d'étanchéité. L'électrode intérieure 58 s'étend parallèlement à l'axe 49 et fait saillie au-delà de l'extrémité radialement interne de la première partie 48 du corps 46.

De plus, la première partie 48 du corps 46 intègre un canal 60 ménagé à l'intérieur de la paroi du corps 46 et s'étendant parallèlement à l'axe 49 précité, et donc parallèlement à l'électrode intérieure 58. Ce canal 60 découche au niveau de l'extrémité radialement interne de la première partie 48 du corps 46 et forme un injecteur de carburant également dénommé injecteur de démarrage, comme cela apparaîtra plus clairement dans ce qui suit.

La platine 54 intègre un canal 62 communiquant avec le canal 60 de la première partie 48 du corps 46.

La seconde partie 56 du corps 46 forme un boîtier délimitant un logement pour le module d'alimentation électrique du dispositif.

Ce module d'alimentation électrique comprend un élément piézoélectrique 64 en forme de disque logé dans un fond radialement interne du logement précité, un piston 66 également en forme de disque monté coulissant dans une partie médiane de ce logement, et un ressort hélicoïdal 68 interposé entre l'élément piézoélectrique 64 et le piston 66 et formant des moyens élastiques selon la terminologie de la présente invention.

De plus, la seconde partie 56 du corps 46 comporte un conduit d'admission de carburant 70 ménagé dans une paroi de tête radialement externe 71 de cette seconde partie 56 et équipé d'une vanne à clapet 72.

La seconde partie 56 du corps 46 comprend en outre un canal 74 ménagé dans une paroi latérale de cette seconde partie 56 et communiquant d'une part avec le canal 62 ménagé dans la platine 54, et d'autre part avec une chambre de circulation de fluide 76 dans laquelle débouche le conduit d'admission 70. Cette chambre de circulation de fluide 76 est ménagée à l'intérieur du logement délimité par la seconde partie 56 du corps 46, radialement vers l'extérieur par rapport au piston 66 qui délimite cette chambre 76. Le canal 74 est raccordé à la chambre de circulation de fluide 76 par un orifice d'échappement 77, selon la terminologie de la présente invention.

La vanne 72 comporte un clapet 78 et un siège 80 (figure 2a) constitué d'une nervure annulaire qui s'étend en saillie vers l'intérieur dans le conduit d'admission 70 et qui délimite un orifice 82 d'admission de carburant. Le clapet 78 forme un élément obturateur, selon la terminologie de la présente invention.

Le clapet 78 est solidarisé au piston 66 par une tige 84 s'étendant selon l'axe 49 de la seconde partie 56 du corps 46 qui se confond avec l'axe de la première partie 48 de ce corps 46 et par rapport auquel le conduit d'admission 70 est centré, dans l'exemple particulier représenté sur les figures 2 et 2a. La tige 84 fait partie de moyens de commande de la vanne 72, selon la terminologie de la présente invention.

Le conduit d'admission 70 est raccordé à des moyens d'amenée de carburant de la turbomachine, comprenant une vanne d'arrêt 42, une pompe 40, et un réservoir de carburant 38, qui sont par exemple d'un type conventionnel.

Les éléments qui composent le module d'alimentation électrique sont dimensionnés de sorte que lorsque le ressort 68 est au repos, le clapet 78 de la vanne 72 est écarté de son siège 80 de sorte que l'orifice d'admission de carburant 82 soit ouvert.

Le dispositif d'allumage 44 permet l'allumage de la chambre de combustion 14 selon un procédé qui va maintenant être décrit.

Ce procédé d'allumage débute par une mise en service des moyens d'amenée de carburant raccordés au conduit d'admission 70, notamment par une ouverture de la vanne d'arrêt 42.

Dès lors, le carburant pénètre dans la chambre de circulation 76 par l'orifice d'admission 82 et remplit cette chambre.

La pression du carburant est choisie suffisamment élevée pour que le remplissage de la chambre de circulation 76 par ce carburant induise un déplacement du piston 66 radialement vers l'intérieur, ou plus généralement dans une direction d'accroissement du volume de la chambre 76, symbolisée par la flèche 85 de la figure 2a.

Un tel déplacement du piston 66 provoque une compression du ressort 68 se traduisant par l'application d'une force croissante sur les faces radialement externe 86 et interne 88 de l'élément piézoélectrique 64. Il en résulte, par effet piézoélectrique, l'apparition d'une tension électrique entre les électrodes 48 et 58 auxquelles l'élément piézoélectrique 64 est relié électriquement.

Pendant ce déplacement du piston 66, du carburant peut aussi s'écouler par l'orifice d'échappement 77 dans le canal 74 puis dans les canaux 62 et 60 qui forment conjointement l'injecteur du dispositif.

Le déplacement du piston 66 se poursuit jusqu'à ce que le clapet 78 de la vanne 72 vienne buter contre son siège 80 et retienne dès lors le piton 66, qui occupe alors une première position prédéterminée, selon la terminologie de l'invention.

Le dispositif est conçu pour que la tension entre les électrodes 48 et 58 atteigne la tension de claquage du milieu présent entre ces électrodes de sorte qu'un arc électrique se manifeste avant que le clapet 78 atteigne son siège 80.

Ensuite, l'admission du carburant étant interrompue, le ressort 68 amorce une détente provoquant un déplacement du piston 66 radialement vers l'extérieur, ou plus généralement dans une direction de réduction du volume de la chambre de circulation de fluide 76, symbolisée par la flèche 87 de la figure 2a, depuis ladite première position qui est ici confondue avec la seconde position prédéterminée telle que définie ci-dessus.

Un tel déplacement du piston 66 provoque l'éjection d'une partie du carburant contenu dans la chambre de circulation de fluide 76 par l'orifice d'échappement 77, jusque dans l'injecteur du dispositif formé des canaux 74, 62 et 60.

De plus, le piston 66 entraîne le clapet 78 de la vanne 72 au cours de son déplacement et induit ainsi l'ouverture de cette vanne 72, rendant ainsi de nouveau possible l'admission de carburant dans la chambre de circulation de fluide 76.

Il s'établit ainsi une alternance de phases d'admission et d'échappement du carburant se traduisant par des oscillations du piston 66, chaque oscillation donnant lieu à un arc électrique entre les électrodes 48 et 58 du dispositif.

La longueur du trajet parcouru par le carburant au sein des canaux 74, 62 et 60 formant l'injecteur du dispositif permet de lisser le débit de carburant en sortie de cet injecteur. Ce lissage est d'autant plus prononcé lorsque le dispositif, par son dimensionnement, favorise un écoulement d'une certaine quantité de carburant depuis la chambre de circulation de fluide 76 vers l'injecteur pendant la phase d'admission.

Selon un exemple démonstratif, le dispositif peut en outre comporter une chambre de tranquillisation disposée sur le trajet du carburant entre la chambre de circulation de fluide 76 et la sortie de l'injecteur du dispositif, afin d'améliorer davantage la régularité du débit du carburant en sortie de l'injecteur.

Bien entendu, le dispositif 44 des figures 2 et 2a n'est qu'un exemple illustratif choisi parmi différentes possibilités de configurations de la présente invention.

Ainsi, comme expliqué ci-dessus, les moyens élastiques 68 peuvent être d'un type différent, par exemple du type ressort à gaz.

De plus, l'agencement relatif entre le piston 66 et l'élément piézoélectrique 64 peut être différent. En particulier, l'élément piézoélectrique peut lui-même former le piston lorsque cela présente un intérêt.

Par ailleurs, l'injecteur du dispositif 44 peut être formé à l'extérieur du corps 46, et être donc dissocié de la bougie du dispositif. Dans ce cas, l'injecteur peut par exemple être du même type que l'injecteur 20 de la figure 1, tout en étant alimenté en carburant depuis l'orifice d'échappement 77 du dispositif au moyen de conduits appropriés.

En outre, la vanne 72 peut être d'un type différent de celui décrit ci-dessus.

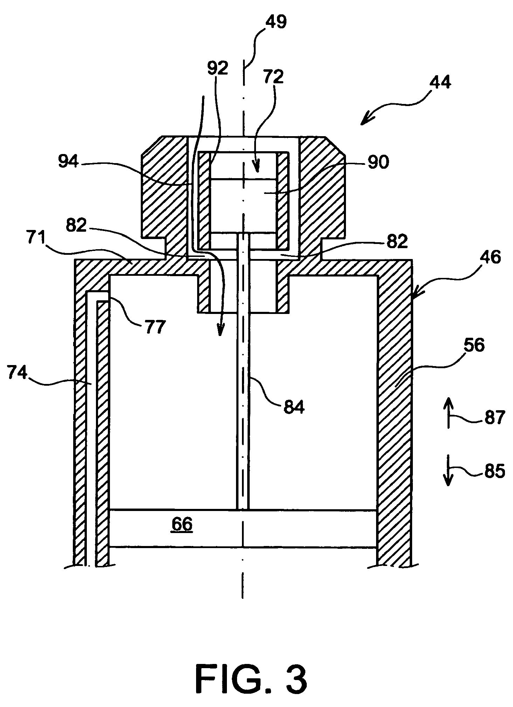

La figure 3 décrit ainsi un dispositif d'allumage 44 de chambre de combustion annulaire 14 de turbomachine d'aéronef selon un deuxième mode de réalisation préféré de l'invention, qui est globalement semblable au dispositif décrit ci-dessus mais dans lequel l'élément obturateur de la vanne 72 prend la forme d'un piston d'obturation 90 monté coulissant à étanchéité dans une cheminée 92 solidaire du corps 46 du dispositif.

La cheminée 92 précitée débouche dans la chambre de circulation de fluide 76 et présente une pluralité d'orifices d'admission 82 répartis autour de l'axe 49 du corps 46 qui constitue un axe de coulissement du piston d'obturation 90.

Le piston d'obturation 90 est déplaçable entre une position d'ouverture des orifices d'admission 82 telle que représentée sur la figure 3, dans laquelle ce piston d'obturation 90 est décalé de ces orifices 82 selon la direction de son axe de coulissement 49 de manière à autoriser une circulation de fluide 94 au travers de ces orifices 82, et une position d'obturation des orifices d'admission 82, dans laquelle le piston d'obturation 90 est disposé en regard de ces orifices 82 de manière à empêcher toute circulation de fluide au travers de ces orifices.

Dans ce deuxième mode de réalisation de l'invention, le piston 66 du dispositif 44 peut poursuivre son déplacement dans la direction d'accroissement du volume de la chambre de circulation de fluide 76 même lorsque la vanne 72 est fermée, sans que ce piston 66 ne soit retenu par l'élément obturateur 90 de la vanne 72.

Du fait de l'absence d'élément formant butée vis-à-vis de l'ensemble mobile comprenant le piston 66, les oscillations de ce piston 66 peuvent être d'une grande régularité.

Il est à noter que le mouvement de cet ensemble mobile est alors déterminé essentiellement par la raideur des moyens élastiques 68, par la masse de cet ensemble mobile et par la pression du fluide, ainsi que par les frottements induits lors du mouvement de cet ensemble mobile.

D'autres configurations de la vanne 72 sont bien entendu possibles sans sortir du cadre de la présente invention.

D'une manière générale, le dispositif d'allumage 44 selon l'invention présente l'avantage de ne pas requérir d'alimentation électrique externe comme c'est le cas avec certains dispositifs d'allumage connus de l'art antérieur, ce qui permet notamment au dispositif selon l'invention d'offrir une fiabilité considérablement améliorée.

De plus, ce dispositif d'allumage peut présenter un encombrement remarquablement réduit, et est donc tout particulièrement avantageux pour équiper des moteurs d'avion de taille relativement réduite, tels que les moteurs destinés à équiper les avions d'affaires.

## Revendications

1. Dispositif d'allumage (44) pour chambre de combustion de turbomachine, comprenant deux électrodes (48, 58) formant une bougie d'allumage, et un module d'alimentation électrique desdites électrodes (48, 58), ledit module comportant un élément piézoélectrique (64) relié électriquement auxdites électrodes (48, 58) et des moyens d'application par intermittence d'une force sur ledit élément piézoélectrique (64) de manière à générer entre lesdites électrodes (48, 58) une tension électrique suffisante pour provoquer un arc électrique entre celles-ci, lesdits moyens comprenant une chambre de circulation de fluide (76), comportant au moins deux orifices destinés au raccordement de ladite chambre à un circuit (74, 62, 60) de circulation d'un fluide sous pression et formant respectivement au moins un orifice d'admission (82) et au moins un orifice d'échappement (77) pour ledit fluide ;
ledit dispositif étant **caractérisé en ce qu'**il comprend :
- une vanne (72) d'obturation dudit orifice d'admission (82) ;
- un piston (66) délimitant ladite chambre (76) et déplaçable selon deux directions opposées (85, 87) correspondant respectivement à un accroissement et à une réduction du volume de ladite chambre (76) ;
- des moyens élastiques (68) sollicitant ledit piston (66) dans ladite direction (87) de réduction du volume de la chambre (76), et agissant sur ledit élément piézoélectrique (64) ; et
- des moyens (84) de commande de ladite vanne (72), configurés de manière à fermer ladite vanne (72) lorsque ledit piston (66), se déplaçant dans ladite direction (85) d'accroissement du volume de la chambre (76) sous la pression d'un fluide admis dans ladite chambre (76) par ledit orifice d'admission (82), et comprimant ainsi lesdits moyens élastiques (68) de sorte que ces derniers appliquent ladite force sur ledit élément piézoélectrique (64), atteint une première position prédéterminée, et de manière à ouvrir ladite vanne (72) lorsque ledit piston (66), se déplaçant dans ladite direction (87) de réduction du volume de la chambre (76) sous la pression desdits moyens élastiques (68) et induisant ainsi une éjection de fluide hors de ladite chambre (76) par ledit orifice d'échappement (77), dépasse une deuxième position prédéterminée.

2. Dispositif selon la revendication 1, **caractérisé en ce que** ladite vanne (72) comporte un élément obturateur (78) qui est relié mécaniquement audit piston (66) par lesdits moyens (84) de commande de la vanne (72), et qui est déplaçable entre une position d'obturation dudit orifice d'admission (82) et une position d'ouverture dudit orifice d'admission (82) sous l'effet d'un déplacement dudit piston (66).

3. Dispositif selon l'une quelconque des revendications précédentes, **caractérisé en ce que** ledit module d'alimentation électrique comprend un boîtier (56) qui délimite ladite chambre de circulation de fluide (76) et :
- dans lequel ledit élément piézoélectrique (64) est logé ;
- dans lequel ledit piston (66) est monté coulissant, entre ladite chambre (76) et ledit élément piézoélectrique (64) ; et
- dans lequel lesdits moyens élastiques (68) sont logés, en étant interposés entre ledit piston (66) et ledit élément piézoélectrique (64).

4. Dispositif selon l'une quelconque des revendications précédentes, **caractérisé en ce qu'**il comprend en outre au moins un injecteur de carburant (74, 62, 60) raccordé audit orifice d'échappement (77) de ladite chambre de circulation de fluide (76).

5. Dispositif selon la revendication précédente, **caractérisé en ce que** lesdites électrodes (48, 58), ledit module d'alimentation électrique et ledit injecteur de carburant (74, 62, 60) sont logés dans un même corps (46) dudit dispositif.

6. Chambre de combustion (14) pour turbomachine, **caractérisée en ce qu'**elle comprend au moins un dispositif d'allumage (44) selon l'une quelconque des revendications précédentes.

7. Turbomachine (10), telle qu'un turboréacteur ou un turbopropulseur d'aéronef, **caractérisée en ce qu'**elle comprend une chambre de combustion (14) selon la revendication précédente ainsi que des moyens commandés d'amenée d'un fluide sous pression (38, 40, 42) qui sont raccordés audit orifice d'admission (82) de ladite chambre de circulation de fluide (76) du dispositif d'allumage (44) de ladite chambre de combustion (14).

8. Turbomachine selon la revendication précédente, **caractérisée en ce que** ledit fluide est un carburant et **en ce que** ledit dispositif d'allumage (44) de ladite chambre de combustion (14) est conforme à la revendication 4 ou 5.

9. Procédé d'allumage d'une chambre de combustion (14) dans une turbomachine (10) selon la revendication 7 ou 8, dans lequel lesdits moyens d'amenée de fluide sous pression (38, 40, 42) sont mis en service de manière à provoquer une alternance entre :
- une phase d'admission dudit fluide dans ladite chambre de circulation de fluide (76) par ledit orifice d'admission (82), au cours de laquelle ledit piston (66) comprime lesdits moyens élastiques (68) sous la pression du fluide de sorte que lesdits moyens élastiques (68) appliquent sur ledit élément piézoélectrique (64) une force suffisante pour que ce dernier induise entre lesdites électrodes (48, 58) une tension électrique permettant la génération d'un arc électrique, jusqu'à ce que le piston (66) atteigne ladite première position prédéterminée de sorte que lesdits moyens de commande (84) provoquent une fermeture de la vanne (72) d'obturation dudit orifice d'admission (82), et
- une phase d'échappement dudit fluide au cours de laquelle lesdits moyens élastiques (68) se détendent et repoussent le piston (66) de manière à induire une éjection de fluide hors de ladite chambre de circulation de fluide (76) par ledit orifice d'échappement (77), et de sorte que lesdits moyens de commande (84) provoquent une ouverture de ladite vanne (72).

10. Procédé selon la revendication précédente, dans lequel ladite turbomachine (10) est conforme à la revendication 8, et ladite phase d'échappement comprend l'alimentation dudit injecteur (74, 62, 60) par ledit carburant provenant de ladite chambre de circulation de fluide (76).

## Patentansprüche

1. Zündvorrichtung (44) für eine Brennkammer einer Turbomaschine, umfassend zwei eine Zündkerze bildende Elektroden (48, 58) und ein Modul zur Stromversorgung der Elektroden (48, 58), wobei das Modul ein piezoelektrisches Element (64), das mit den Elektroden (48, 58) elektrisch verbunden ist, und Mittel zum zeitweisen Anlegen einer Kraft an das piezoelektrische Element (64) umfasst, um zwischen den Elektroden (48, 58) eine elektrische Spannung zu erzeugen, die ausreichend ist, um zwischen ihnen einen elektrischen Lichtbogen zu bewirken, wobei die Mittel eine Fluidzirkulationskammer (76) mit wenigstens zwei Öffnungen umfassen, die zum Anschließen der Kammer an einen Kreis (74, 62, 60) zur Zirkulation eines Druckfluids bestimmt sind und die wenigstens eine Einlassöffnung (82) bzw. wenigstens eine Auslassöffnung (77) für das Fluid bilden;
wobei die Vorrichtung **dadurch gekennzeichnet ist, dass** sie umfasst:
- ein Ventil (72) zum Verschließen der Einlassöffnung (82);
- einen Kolben (66), der die Kammer (76) begrenzt und der in zwei entgegengesetzten Richtungen (85, 87), die einer Vergrößerung bzw. einer Verringerung des Volumens der Kammer (76) entsprechen, beweglich ist;
- Federmittel (68), die den Kolben (66) in der Richtung (87) zur Verringerung des Volumens der Kammer (76) belasten und die auf das piezoelektrische Element (64) wirken; und
- Mittel (84) zur Betätigung des Ventils (72), die dazu ausgelegt sind, das Ventil (72) zu schließen, wenn der Kolben (66), der sich unter dem Druck eines Fluids, das durch die Einlassöffnung (82) in die Kammer (76) eingelassen wird, in der Richtung (85) zur Vergrößerung des Volumens der Kammer (76) bewegt und somit die Federmittel (68) einfedert, so dass letztere die Kraft an das piezoelektrische Element (64) anlegen, eine vorbestimmte erste Position erreicht, und das Ventil (72) zu öffnen, wenn der Kolben (66), der sich unter dem Druck der Federmittel (68) in der Richtung (87) zur Verringerung des Volumens der Kammer (76) bewegt und somit ein Ausstoßen von Fluid aus der Kammer (76) über die Auslassöffnung (77) bewirkt, eine vorbestimmte zweite Position überschreitet.

2. Vorrichtung nach Anspruch 1, **dadurch gekennzeichnet, dass** das Ventil (72) ein Verschlusselement (78) umfasst, welches mit dem Kolben (66) durch die Mittel (84) zur Betätigung des Ventils (72) mechanisch verbunden ist und welches zwischen einer Position zum Verschließen der Einlassöffnung (82) und einer Position zum Öffnen der Einlassöffnung (82) unter der Wirkung einer Bewegung des Kolbens (66) beweglich ist.

3. Vorrichtung nach einem der vorhergehenden Ansprüche, **dadurch gekennzeichnet, dass** das Stromversorgungsmodul ein Gehäuse (56) umfasst, das die Fluidzirkulationskammer (76) begrenzt und:
- in dem das piezoelektrische Element (64) untergebracht ist;
- in dem der Kolben (66) zwischen der Kammer (76) und dem piezoelektrischen Element (64) verschieblich angebracht ist und
- in dem die Federmittel (68) untergebracht und dabei zwischen dem Kolben (66) und dem piezoelektrischen Element (64) eingefügt sind.

4. Vorrichtung nach einem der vorhergehenden Ansprüche, **dadurch gekennzeichnet, dass** sie ferner wenigstens eine Treibstoffeinspritzdüse (74, 62, 60) umfasst, die an die Auslassöffnung (77) der Fluidzirkulationskammer (76) angeschlossen ist.

5. Vorrichtung nach dem vorhergehenden Anspruch, **dadurch gekennzeichnet, dass** die Elektroden (48, 58), das Stromversorgungsmodul und die Treibstoffeinspritzdüse (74, 62, 60) in einem gleichen Gehäuse (46) der Vorrichtung untergebracht sind.

6. Brennkammer (14) für eine Turbomaschine, **dadurch gekennzeichnet, dass** sie wenigstens eine Zündvorrichtung (44) nach einem der vorhergehenden Ansprüche umfasst.

7. Turbomaschine (10), wie ein Turbostrahltriebwerk oder ein Turboprop-Triebwerk eines Luftfahrzeugs, **dadurch gekennzeichnet, dass** sie eine Brennkammer (14) nach dem vorhergehenden Anspruch sowie gesteuerte Mittel zum Zuführen eines Druckfluids (38, 40, 42), die an die Einlassöffnung (82) der Fluidzirkulationskammer (76) der Zündvorrichtung (44) der Brennkammer (14) angeschlossen sind, umfasst.

8. Turbomaschine nach dem vorhergehenden Anspruch, **dadurch gekennzeichnet, dass** das Fluid ein Treibstoff ist und dass die Zündvorrichtung (44) der Brennkammer (14) entsprechend Anspruch 4 oder 5 ist.

9. Verfahren zum Zünden einer Brennkammer (14) in einer Turbomaschine (10) nach Anspruch 7 oder 8, bei dem die Mittel zum Zuführen eines Druckfluids (38, 40, 42) derart in Betrieb genommen werden, dass sie einen Wechsel bewirken zwischen:
- einer Phase zum Einlassen des Fluids in die Fluidzirkulationskammer (76) durch die Einlassöffnung (82), im Laufe derer der Kolben (66) die Federmittel (68) unter dem Druck des Fluids einfedert, so dass die Federmittel (68) an das piezoelektrische Element (64) eine ausreichende Kraft anlegen, damit letzteres zwischen den Elektroden (48, 58) eine elektrische Spannung induziert, die die Erzeugung eines elektrischen Lichtbogens ermöglicht, bis der Kolben (66) die vorbestimmte erste Position erreicht, so dass die Betätigungsmittel (84) ein Schließen des Ventils (72) zum Verschließen der Einlassöffnung (82) bewirken, und
- einer Phase zum Auslassen des Fluids, im Laufe derer die Federmittel (68) sich entspannen und den Kolben (66) zurückdrücken, um ein Ausstoßen von Fluid aus der Fluidzirkulationskammer (76) durch die Auslassöffnung (77) zu bewirken und so dass die Betätigungsmittel (84) ein Öffnen des Ventils (72) bewirken.

10. Verfahren nach dem vorhergehenden Anspruch, bei dem die Turbomaschine (10) entsprechend Anspruch 8 ist und die Auslassphase die Versorgung der Einspritzdüse (74, 62, 60) mit dem aus der Fluidzirkulationskammer (76) stammenden Treibstoff umfasst.

## Claims

1. An ignition device (44) for a turbomachine combustion chamber, comprising two electrodes (48, 58) forming an ignition plug, and a module for electrically powering said electrodes (48, 58), said module including a piezoelectric element (64) electrically connected to said electrodes (48, 58) and means for intermittently applying a force to said piezoelectric element (64) so as to generate between said electrodes (48, 58) an electric voltage sufficient to cause an electric arc therebetween, said means comprising a fluid flow chamber (76), including at least two ports for connecting said chamber to a circuit (74, 62, 60) for flowing a pressurized fluid and forming respectively at least one intake port (82) and at least one exhaust port (77) for said fluid;
said device being **characterised in that** it comprises:
- a valve (72) for sealing said intake port (82);
- a piston (66) bounding said chamber (76) and displaceable along two opposite directions (85, 87) corresponding to an increase and a decrease in the volume of said chamber (76) respectively;
- elastic means (68) biasing said piston (66) into the direction (87) of decrease in the volume of the chamber (76), and acting on said piezoelectric element (64); and
- means (84) for controlling said valve (72), configured so as to close said valve (72) when said piston (66), displacing in said direction (85) of increase in the volume of the chamber (76) under the pressure of a fluid taken in said chamber (76) by said intake port (82), and thus compressing said elastic means (68) such that the same apply said force onto said piezoelectric element (64), reaches a first predetermined position, and so as to open said valve (72) when said piston (66), displacing in said direction (87) of decrease in the volume of the chamber (76) under the pressure of said elastic means (68) and thus inducing a fluid ejection out of said chamber (76) through said exhaust port (77), goes beyond a second predetermined position.

2. The device according to claim 1, **characterised in that** said valve (72) includes a sealing element (78) which is mechanically connected to said piston (66) by said means (84) for controlling the valve (72), and which is displaceable between a position for sealing said intake port (82) and a position for opening said intake port (82) under the effect of the displacement of said piston (66).

3. The device according to any of the preceding claims, **characterised in that** said electric power module comprises a casing (56) which bounds said fluid flow chamber (76) and:
- wherein said piezoelectric element (64) is accommodated;
- wherein said piston (66) is slidably mounted, between said chamber (76) and said piezoelectric element (64); and
- wherein said elastic means (68) are accommodated, by being sandwiched between said piston (66) and said piezoelectric element (64).

4. The device according to any of the preceding claims, **characterised in that** it further comprises at least one fuel injector (74, 62, 60) connected to said exhaust port (77) of said fluid flow chamber (76).

5. The device according to the preceding claim, **characterised in that** said electrodes (48, 58), said electric power module (64, 66, 68, 70, 72) and said fuel injector (74, 62, 60) are accommodated in a same body (46) of said device.

6. A combustion chamber (14) for a turbomachine, **characterised in that** it comprises at least one ignition device (44) according to any of the preceding claims.

7. A turbomachine (10), such as an aircraft turbojet engine or turboprop engine, **characterised in that** it comprises a combustion chamber (14) according to the preceding claim as well as controlled means for feeding a pressurized fluid (38, 40, 42) which are connected to said intake port (82) of said fluid flow chamber (76) of the ignition device (44) of said combustion chamber (14).

8. The turbomachine according to the preceding claim, **characterised in that** said fluid is a fuel and **in that** said ignition device (44) of said combustion chamber (44) is in accordance with claim 4 or 5.

9. A method for igniting a combustion chamber (14) in a turbomachine (10) according to claim 7 or 8, wherein said means for feeding a pressurized fluid (38, 40, 42) are activated so as to cause alternately:
- an intake phase of said fluid into said fluid flow chamber (76) through said intake port (82), during which said piston (66) compresses said elastic means (68) under the pressure of the fluid such that said elastic means (68) apply onto said piezoelectric element (64) a force sufficient for the latter to induce between said electrodes (48, 58) an electric voltage enabling an electric arc to be generated, until the piston (66) reaches said first predetermined position such that said control means (84) cause a closure of the valve (72) for sealing said intake port (82), and
- an exhaust phase of said fluid during which said elastic means (68) extend and push back the piston (66) so as to induce a fluid ejection out of said fluid flow chamber (76) through said exhaust port (77), and such that said control means (84) cause an opening of said valve (72).

10. The method according to the preceding claim, wherein said turbomachine (10) is in accordance with claim 8, and said exhaust phase comprises supplying said injector (74, 62, 60) with said fuel from said fluid flow chamber (76).
